# EUROPÄISCHE PATENTSCHRIFT

(11) **EP 0 740 802 B1**
(45) Veröffentlichungstag und Bekanntmachung des Hinweises auf die Patenterteilung: **29.07.1998**
(21) Anmeldenummer: 95906245.6
(22) Anmeldetag: 18.01.1995
(51) Int. Cl.: G02B 6/42, G02B 6/12

(54) **VERFAHREN ZUR HERSTELLUNG EINES INTEGRIERT OPTISCHEN BAUELEMENTES**
PROCESS FOR PRODUCING AN INTEGRATED OPTICAL COMPONENT
PROCEDE DE FABRICATION D'UNE COMPOSANTE OPTIQUE INTEGRE

(30) Priorität: 18.01.1994 DE 4401219
(43) Veröffentlichungstag der Anmeldung: 06.11.1996
(73) Patentinhaber: ROBERT BOSCH GMBH, 70442 Stuttgart (DE)
(72) Erfinder: KRAGL, Hans, D-64372 Ober-Ramstadt (DE); STRAKE, Engelbert, D-64372 Ober-Ramstadt (DE)
(86) Internationale Anmeldenummer: DE9500056
(87) Internationale Veröffentlichungsnummer: WO9519581

(56) Entgegenhaltungen:
- WO-A-93/21550
- WO-A-93/25924

## Beschreibung

### Stand der Technik

Die Erfindung betrifft ein Verfahren zur Herstellung eines integriert optischen Bauelementes, welches an einen Wellenleiter gekoppelt ist.

Aus WO-A 93/25924 ist ein optisches polymeres Bauelement bekannt zum Ankoppeln von Photoelementen an optische Wellenleiter. Zwischen der aktiven Zone des optischen Bauelements und dem Wellenleiter ist eine Pufferschicht angeordnet, die einen Brechungsindex aufweist, der kleiner ist als der Brechnungsindex des optischen Wellenleiters. Das optische Bauelement und der wellenleiter sina in abformbares Material in Form einer Substratplatte eingebettet.

Aus der nicht veröffentlichten Patentanmeldung DE-P 42 40 95 00 ist bereits ein Verfahren zur Herstellung eines Deckels für eine integriert-optische Schaltung bekannt. Bei diesem Verfahren wird ein optisches Bauelement auf einen Formstempel aufgelegt und dabei von Justiereinrichtungen des Formstempels in bezug auf Führungsnasen, die zur späteren Aufnahme von Wellenleitern vorgesehen sind, justiert angeordnet. Das optische Bauelement und der Formstempel werden mit einer aushärtbaren Flüssigkeit umgossen. Nach dem Aushärten der Flüssigkeit wird der Formstempel entfernt und so ein Deckel erhalten, der ein optisches Bauelement enthält, das auf Führungsnasen justiert angeordnet ist. Dieser Deckel wird anschließend auf eine integriert-optische Schaltung, die einen Wellenleiter aufweist, so aufgebracht, daß das optische Bauelement an den Wellenleiter angekoppelt ist.

Weiterhin ist es aus dem Artikel "Impedance matching for enhanced waveguide/photodetector integration", R.J. Deri, O. Wada, Appl, Phys. Lett. 55 (26), 1989, S. 2712, bekannt, zwischen einem Wellenleiter und einem Fotodetektor eine Pufferschicht anzubringen, die die optische Ankopplung des Fotodetektors an den Wellenleiter erhöht. Dazu ist die Pufferschicht im Brechungsindex an den Brechungsindex des Wellenleiters und den Brechungsindex des Fotodetektors angepaßt. Die Pufferschicht besteht vorzugsweise aus mehreren Schichten, um die Ankopplung zu verbessern.

Aus dem Artikel "Analysis of Wavelength-Selective Photodetectors Based on Grating-Assisted Forward Coupling", Hajime Sakata, Journal of Lightwave Technology, Vol. 11., No. 4, April 1993, S. 560, ist es bekannt, einen integrierten Fotodetektor zu verwenden, wobei der Wellenleiter aus verschiedenen Schichten aufgebaut ist und eine Schicht auf der Oberfläche eine Gitterstruktur in Form von rechteckigen Stufen aufweist. Die Effizienz der Lichtauskopplung ist durch die Höhe der Stufen, aus denen das Gitter aufgebaut ist und die beteiligten Brechungsindizes, beeinflußbar. Die Effizienz der Lichtauskopplung wird maximal bei einer optischen Wellenlänge, die durch die verwendete Gitterperiode bestimmt wird und zeigt eine ausgeprägte Wellenlängenselektivität.

### Vorteile der Erfindung

Das nach dem Verfahren gemäß Anspruch 1 hergestellte Bauelement hat den Vorteil, daß die Ankopplung des optischen Bauelementes an den Wellenleiter verbessert wird, da die Justierung des optischen Bauelementes auf den Wellenleiter präziser ist.

Das erfindungsgemäße Verfahren zur Herstellung eines integriert-optischen Bauelementes hat außerdem den Vorteil, daß das integriert optische Bauelement mit Abformtechniken einfach und kostengünstig herzustellen ist. Zudem ermöglicht das verwendete Verfahren eine erhöhte Justiergenauigkeit des optischen Bauelementes in bezug auf den Wellenleiter, wodurch die Ankopplung des optischen Bauelementes an den Wellenleiter verbessert wird.

Durch die in den Unteransprüchen aufgeführten Maßnahmen sind vorteilhafte Weiterbildungen und Verbesserungen des im Anspruch 1 angegebenen Verfahrens möglich. Besonders vorteilhaft ist es, das optische Bauelement, die Pufferschicht und den Wellenleiter gemeinsam in einer Substratplatte anzuordnen, da dadurch die Justiergenauigkeit des optischen Bauelementes mit der Pufferschicht relativ zum Wellenleiter erhöht wird und die Ankopplung zusätzlich verbessert wird.

Weiterhin ist es von Vorteil, die Pufferschicht mit dem Brechungsindex an den Wellenleiter und an das optische Bauelement so anzupassen, daß die Ankopplung des optischen Bauelementes an den Wellenleiter erhöht wird. Besonders vorteilhaft ist es, beim Abformem des integriert optischen Bauelementes Entlastungsstege anzuordnen und somit zum einen eine Beschädigung des optischen Bauelementes bei der Herstellung zu verhindern und zum anderen den Abstand zwischen der Pufferschicht und dem Wellenleiter genau festzulegen.

Eine besonders effiziente Ankopplung des optischen Bauelementes an den Wellenleiter wird erreicht, indem die Pufferschicht aus verschiedenen Schichten mit unterschiedlichen Dicken und/oder unterschiedlichen Brechungsindizes gebildet wird.

Eine besondere Ausgestaltung der Pufferschicht wird erreicht, indem die Pufferschicht mit Heizelementen versehen wird, mit denen der Brechungsindex der Pufferschicht eingestellt wird.

Eine vorteilhafte Ausgestaltung der Pufferschicht besteht darin, die Pufferschicht als einen weiteren Wellenleiter auszubilden.

In vorteilhafter Weise wird die wellenlängenselektive evanenszente Ankopplung des optischen Bauelementes an den Wellenleiter verbessert, indem die Pufferschicht in der Höhe periodische Änderungen aufweist.

Dadurch, daß das optische Bauelement mit einer Justiernut versehen wird, kann es besonders einfach beim Einlegen in das Formwerkzeug justiert werden.

Die wellenselektive Ankopplung des optischen Bauelementes an den Wellenleiter wird in vorteilhafter Weise verbessert, indem der Wellenleiter in seiner Form periodisch strukturiert wird.

Die periodische Strukturierung des Wellenleiters Wirt in einfacher Weise durch eine periodische Variation der Breite des Wellenleiters erreicht.

Eine weitere vorteilhafte Strukturierung des Wellenleiters besteht darin, den Wellenleiter mit konstanter Breite periodisch strukturiert auszubilden.

Weiterhin bietet die periodische Änderung der Höhe des Wellenleiters eine Verbesserung der wellenselektiven Ankopplung des optischen Bauelementes.

Eine weitere Verbesserung der wellenselektiven Ankopplung des optischen Bauelementes an den Wellenleiter wird erreicht, indem die Oberfläche des optischen Bauelementes als optisches Gitter strukturiert wird.

In vorteilhafter Weise werden die Elektroden des optischen Bauelementes als optisches Gitter ausgebildet und erhöhen somit die wellenselektive Ankopplung des optischen Bauelementes in den Wellenleiter.

Eine besonders präzise Justierung und damit effiziente Ankopplung des optischen Bauelementes an den Wellenleiter wird erreicht, indem das optische Bauelement, das eine Justiernut aufweist, auf eine Justiernase des Formwerkzeuges aufgelegt wird und das optische Bauelement zusätzlich von Justiernasen entlang den Außenkanten des optischen Bauelementes zusätzlich justiert wird.

Durch die Verwendung eines Formwerkzeuges, das ein Wellenleiterabformelement aufweist, wird in einfacher Weise ein Verfahren ermöglicht, das ein optisches Bauelement auf einen Wellenleiter mit großer Genauigkeit justiert.

In vorteilhafter Weise wird das Verfahren dadurch verbessert, daß das Formwerkzeug einen Entlastungssteg aufweist, auf den das optische Bauelement beim Einlegen aufgelegt wird. Damit wird eine Beschädigung der aktiven Zone des optischen Bauelementes und somit eine Beschädigung durch Bruch des optischen Bauelementes verhindert und der Abstand des optischen Bauelementes zum Wellenleiter genau festgelegt.

Von besonderem Vorteil ist es, ein optisches Bauelement mit einer Pufferschicht zur Herstellung eines optisch integrierten Bauelementes zu versehen, da die Pufferschicht die evaneszente Ankopplung des optischen Bauelementes an den Wellenleiter zusätzlich verbessert.

### Zeichnung

Ausführungsbeispiele der Erfindung sind in der Zeichnung dargestellt und in der nachfolgenden Beschreibung näher erläutert. Figur 1 zeigt ein Formwerkzeug mit einem optischen Bauelement zur Herstellung eines integriert optischen Bauelementes, Figur 2 ein integriert optisches Bauelement, Figur 3 ein weiteres integriertes optisches Bauelement, wobei ein Fotodetektor in der Deckplatte und das optische Bauelement in der Substratplatte eingebracht sind, Figur 4 ein Formwerkzeug mit einem Wellenleiterabformelement, das aus seitlich versetzten Längsabschnitten besteht, Figur 5 ein Formwerkzeug mit einem Wellenleiterabformelement, das in der Breite periodisch strukturiert ist und Figur 6 ein optisches Bauelement mit einer Justiernut und ein Formwerkzeug mit einer Justiernase.

### Beschreibung der Ausführungsbeispiele

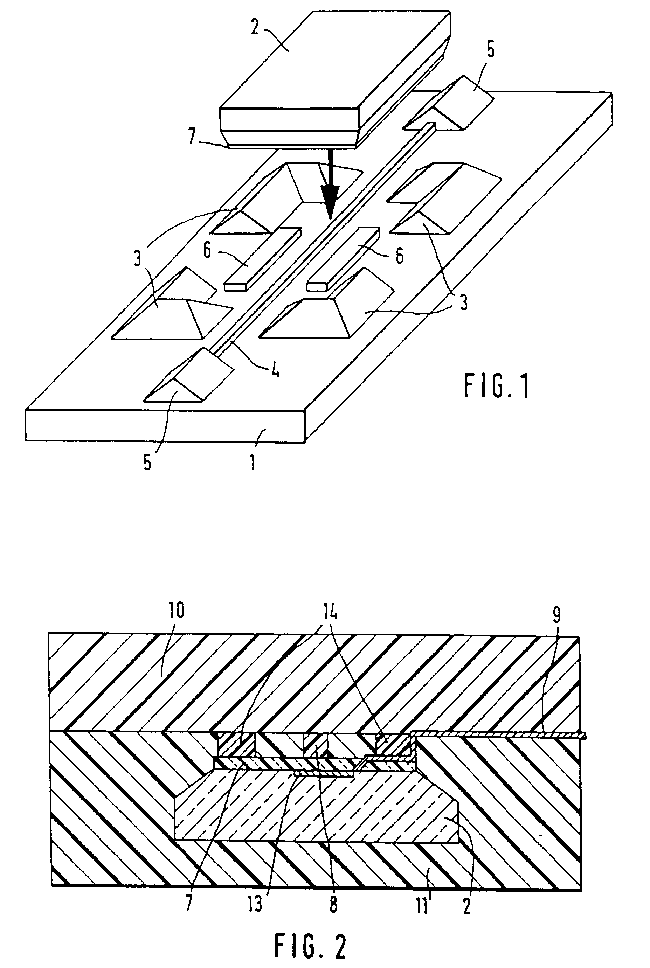

Figur 1 zeigt ein Formwerkzeug 1, das in einer Flucht liegende Abformelemente 5 aufweist. Zwischen den Abformelementen 5 ist ein Wellenleiterabformelement 4 angeordnet. Entlang den Seiten des Wellenleiterabformelementes 4 ist auf dem Formwerkzeug 1 auf jeder Seite ein Entlastungssteg 6 parallel zum Wellenleiterabformelement 4 angeordnet. Das Formwerkzeug 1 weist vier Justiernasen 3 auf. Die Justiernasen 3 haben eine abgewinkelte Rechteckform, wobei die Seitenflächen nach oben geneigt zusammenlaufen. Die Justiernasen 3 sind so angeordnet, daß sie eine rechteckförmige Fläche begrenzen, in der die zwei Entlastungsstege 6 angeordnet sind und durch die das Wellenleiterabformelement 4 läuft. Über dem Formwerkzeug 1 ist ein optisches Bauelement 2 mit einer Pufferschicht 7 angeordnet. Das optische Bauelement 2 weist zur Pufferschicht 7 hin nach innen geneigte Außenflächen auf. Die Justiernasen 3 weisen an den innenliegenden Seiten, die dem Wellenleiterabformelement 4 zugewandt sind, ebenfalls geneigte Flächen auf. Beim Einlegen des optischen Bauelementes verengt sich der Raum zwischen den Justiernasen und dem optischen Baulement in Richtung auf die Oberfläche des Formwerkzeuges 1. Dadurch wird eine Justierung des optischen Bauelementes 2 beim Einlegen erreicht. Die Justiernasen 3 können auch andere Formen und Anordnungen aufweisen. Ihre Funktion besteht darin, das optisches Bauelement zu justieren. Je nach Anwendung kann der Fachmann eine beliebige Anzahl von Abformelementen 5 anordnen oder auch auf die Abformelemente 5 verzichten. Das Wellenleiterabformelement 4 kann in beliebiger Form angeordnet sein.

Die Anordnung nach Figur 1 funktioniert wie folgt: Das optische Bauelement 2 wird in das Formwerkzeug 1 eingelegt und dabei von den Justiernasen 3 in den Eckbereichen umfaßt. Die Abschrägung der Außenkanten des optischen Bauelementes 2 und der Innenkanten der Justiernasen 3 erlauben ein Gleiten der Außenkanten des optischen Bauelementes 2 und der Innenkanten der Justiernasen 3. Der Raum zwischen den Justiernasen 3 verjüngt sich in Richtung des Wellenleiterabformelementes 4. Somit wird beim Einlegen das optische Bauelement 2 präsise von den Justiernasen 3 in bezug auf das Wellenleiterabformelement 4 justiert.

Das optische Bauelement 2 liegt nach dem Einlegen auf den Entlastungsstegen 6 auf. Die Entlastungsstege 6 sind so angeordnet, daß beim Einlegen z. B. eine aktive Zone des optischen Bauelementes nicht beschädigt wird und zugleich der Abstand des optischen Bauelementes 2 bzw. der Pufferschicht 7 zum Wellenleiterabformelement 4 genau festgelegt ist.

Das eingelegte optische Bauelement 2 wird mit einem abformbaren Werkstoff umformt bzw. mit einer aushärtbaren Flüssigkeit umgossen. Dazu eignen sich besonders polymere Materialien. Nach dem Aushärten bzw. dem Abformen wird das Formwerkzeug 1 entfernt und man erhält ein optisches Bauelement 2 mit einer Pufferschicht 7, das auf einen Wellenleiter 8, der von dem Wellenleiterabformelement 4 abgeformt wurde, justiert ist.

Anstelle eines optischen Bauelementes 2 mit einer Pufferschicht 7 kann auch ein optisches Bauelement 2 ohne eine Pufferschicht 7 verwendet werden. Als Formwerkzeug 1 kann auch ein Formwerkzeug 1 verwendet werden, das kein Wellenleiterabformelement 4 und keine Entlastungsstege 6 aufweist. Bei einem solchen Formwerkzeug 1 wird das optische Bauelement 2 durch die Justiernasen 3 auf die Abformelemente 5 justiert.

Figur 2 zeigt ein integriert optisches Bauelement, das ein optisches Bauelement 2 mit einer Fotodetektorzone 13 und einer Pufferschicht 7 aufweist. Auf der Pufferschicht 7 ist ein Wellenleiter 8 angeordnet, der an die Fotodetektorzone 13 optisch angekoppelt ist. Unter dem Gebiet der Pufferschicht 7, das vom Wellenleiter 8 abgedeckt ist, ist die Fotodetektorzone 13 im optischen Bauelement 2 angeordnet.
Links und rechts neben dem Wellenleiter 8 sind auf der Pufferschicht 7 abgeformte Druckentlastungsstege 14 angeordnet.

Das optische Bauelement 2, die Pufferschicht 7, die abgeformten Druckentlastungsstege 14 und der Wellenleiter 8 sind in einer Substratplatte 11, die aus abformbarem Material bzw. ausgehärteter Flüssigkeit besteht, eingebracht. Die abgeformten Druckentlastungsstege 14 und der Wellenleiter 8 sind mit einer Deckplatte 10 abgedeckt. Die Deckplatte 10 besteht beispielsweise ebenfalls aus einem abformbaren Material bzw. einer ausgehärteten Flüssigkeit. Die Fotodetektorzone 13 wird von außen mit einer Elektrode 9 kontaktiert. Die Deckplatte 10 wird z. B. mit einem Präpolymerkleber unter Auffüllung des abgeformten Wellenleiters 8 mit Präpolymerkleber auf die Substratplatte 11 aufgeklebt. Der Präpolymerkleber weist nach dem Aushärten einen Brechungsindex auf, der höher ist als der der Substratplatte 11 und der Deckplatte 10 und bildet so den Wellenleiter 8. Zusätzlich fixiert der Präpolymerkleber die Lichtleiter, die in den Faserführungsnuten, die von den Abformelementen 5 abgeformt wurden, eingelegt sind.

Der Wellenleiter 8 besteht vorzugsweise aus einem polymeren Material. Das optische Bauelement wird z.B. durch einen Fotodetektor gebildet, der aus Indiumphosphid, Galliumarsenid oder Silizium aufgebaut ist. Der Fotodetektor ist beispielsweise als Diffusionsdiode oder als Metall-Halbleiter-Metall-Struktur, wie bei W. Ng et al, "High-Efficiency Wavegeuide-Compled ... MSM Detektor ...", Photonics Technology Letters, Vol. 5, No. 5, May 1993, Seite 514 beschrieben, aufgebaut.

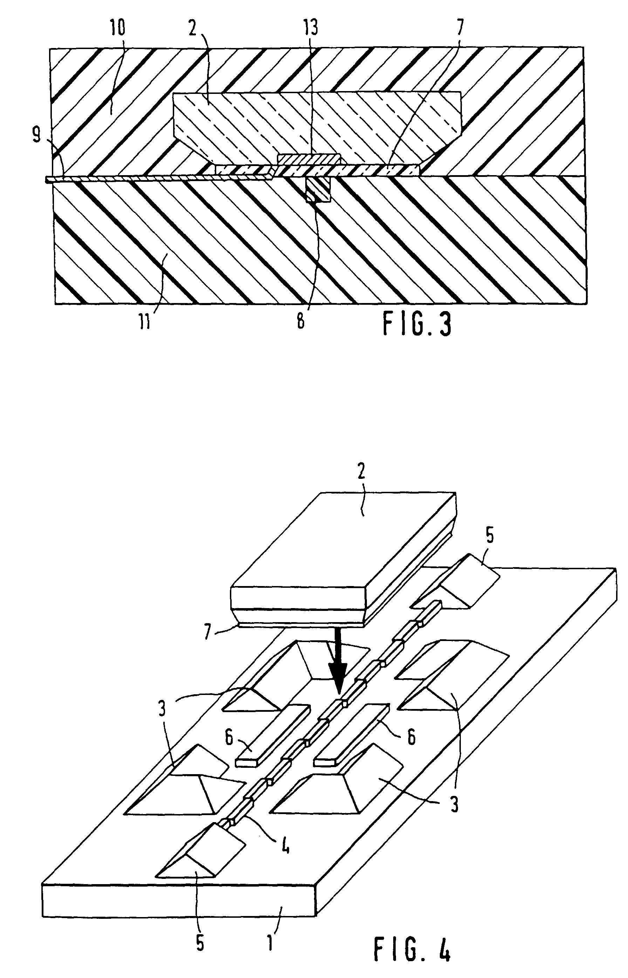

Figur 3 zeigt in einer Alternative zur Erfindung ein integriert optisches Bauelement entsprechend Figur 2, wobei jedoch keine abgeformten Druckentlastungsstege 14 vorhanden sind und das optische Bauelement 2 sich in der Deckplatte 10 befindet.

Die in Figur 3 dargestellte Deckplatte 10 wird erhalten, wenn ein Formwerkzeug 1 verwendet wird, das kein Wellenleiterabformelement 4 und keine Entlastungsstege 6 aufweist. Der Wellenleiter 8 wird mit Hilfe eines entsprechenden Formwerkzeuges in die Substratplatte 11 eingebracht. Zusätzlich muß die Substratplatte 11 beim Auflegen auf die Deckplatte 10 so justiert werden, daß der Wellenleiter 8 in dem Bereich auf der Pufferschicht 7 aufliegt, in dem die Fotodetektorzone 13 angeordnet ist.

Wird ein optisches Bauelement 2 verwendet, auf das keine Pufferschicht 7 aufgebracht ist, so werden optisch integrierte Bauelemente erhalten, die keine Pufferschicht 7 aufweisen.

Die Pufferschicht 7 weist eine genau festgelegte Dicke und einen genau bestimmten Brechungsindex auf, welcher vom Brechungsindex des optischen Bauelementes und vom Brechungsindex des abformbaren Materials bzw. vom Brechungsindex der Deckplatte 10 verschieden ist. Die Pufferschicht 7 kann entsprechend dem gewünschten Brechungsindex auf verschiedene Weise erzeugt werden: z.B. durch Aufdampfen eines amorphen Materials, wie z.B. Titandioxid, durch Abscheiden aus der Gasphase (Chemical Vapour Deposition) oder durch Beschichten mit einem geeigneten polymeren Material. Die Pufferschicht 7 kann aus einer Folge optisch transparenter Schichten unterschiedlicher Dicke und verschiedener Brechungsindizes bestehen. Sie kann entweder auf dem bereits mit Elektroden 9 versehenen optischen Bauelement 2 liegen oder aber zwischen dem optischen Bauelement 2 und den Elektroden 9 angeordnet sein.

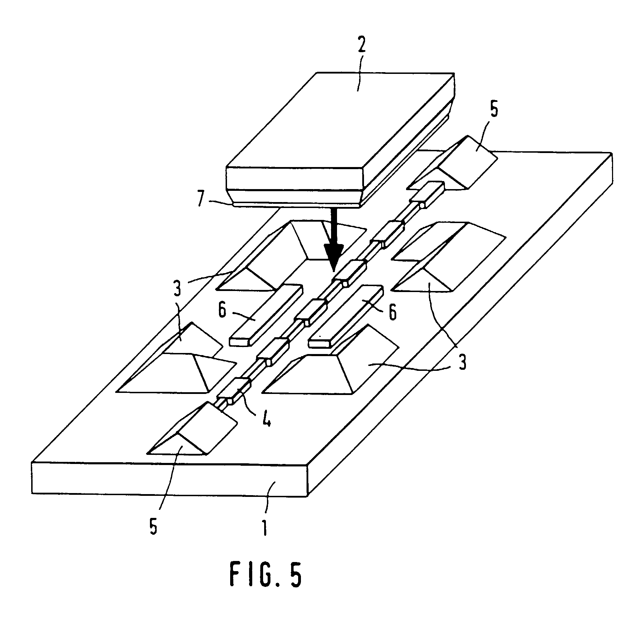

Figur 4 zeigt ein Formwerkzeug 1 entsprechend Figur 1, wobei jedoch das Wellenabformelement 4 aus seitlich versetzten Längsabschnitten besteht. Anstelle der dargestellten Form kann das Wellenleiterabformelement jede periodische Struktur aufweisen, die eine wellenselektive Ankopplung verbessert.

Mit Hilfe des in Figur 4 dargestellten Wellenleiterabformelementes 4 wird ein Wellenleiter 8 abgeformt, der aufgrund seiner periodischen Strukturierung die wellenselektive Ankopplung des optischen Bauelementes 2 an den Wellenleiter 8 verbessert.

Figur 5 zeigt ein Formwerkzeug 1 entsprechend Figur 1, wobei jedoch das Wellenleiterabformelement 4 aus periodisch strukturierten Längsabschnitten besteht, die abwechselnd eine unterschiedliche Breite aufweisen. Mit Hilfe dieses Wellenabformelementes 4 wird ein Wellenleiter 8 abgeformt, der aufgrund seiner Strukturierung die wellenselektive Ankopplung des optischen Bauelementes 2 an den Wellenleiter 8 ermöglicht. Entsprechend der gewünschten Ankopplung wählt der Fachmann die Form des Wellenleiterabformelementes 4 so, daß die gewünschte wellenlängenselektive Abkopplung erreicht wird. Der Fachmann kann periodische sinus- oder cosinusförmige Wellenleiterabformelemente anordnen, um eine wellenlängenselektive Ankopplung zu erreichen. Je nach Anwendung kann ein beliebig periodisch strukturiertes Wellenleiterabformelement angeordnet werden.

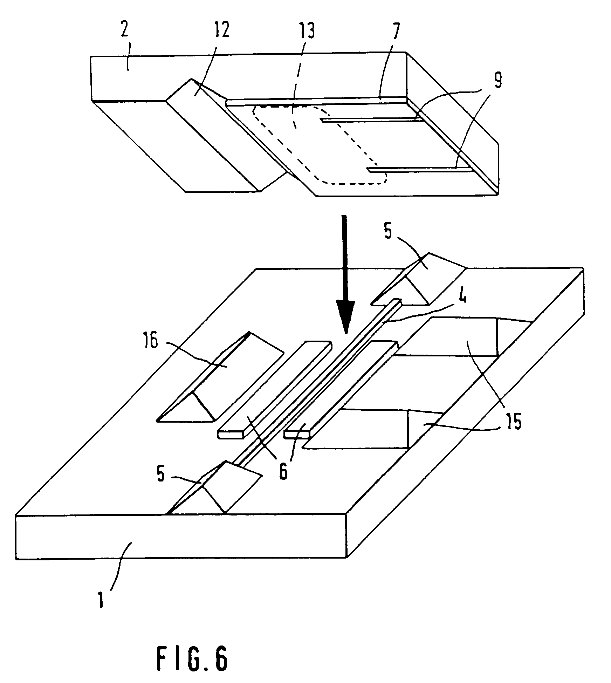

Figur 6 zeigt ein optisches Bauelement 2, das eine Justiernut 12, eine Fotodetektorzone 13, eine Pufferschicht 7 und Elektroden 9 aufweist. Das Formwerkzeug 1 weist Abformelemente 5 und ein Wellenleiterabformelement 4, das zwischen den Abformelementen 5 angeordnet ist, auf. Neben dem Wellenleiterabformelement 4 sind auf jeder Seite Entlastungsstege 6 angeordnet, die parallel zum Wellenleiterabformelement 4 verlaufen. Das Formwerkzeug 1 weist eine erste Justiernase 16 auf, die parallel zum Wellenleiterabformelement 4 angeordnet ist. Zusätzlich sind zwei weitere Justiernasen 15 seitlich angeordnet, die parallel und seitlich versetzt zueinander und senkrecht zum Wellenleiterabformelement 4 angeordnet sind.

Die Lage der ersten Justiernase 16 ist in bezug auf die weiteren Justiernasen 15 durch die Form des verwendeten optischen Bauelementes 2 festgelegt, da die weiteren Justiernasen 15 ein eingelegtes optisches Bauelement 2 seitlich justieren und die erste Justiernase 16 in die Justiernut 12 des optischen Bauelementes 2 eingreift. In Abhängigkeit von der Form des optischen Bauelementes 2 wird die Lage der ersten Justiernase 16 in bezug auf die weiteren Justiernasen 15 festgelegt. Weiterhin ist es möglich, daß nur eine erste Justiernase 16 und keine weitere Justiernase 15 angeordnet ist.

Beim Einlegen des optischen Bauelementes 2 greift die erste Justiernase 16 in die Justiernut 12 ein. Gleichzeitig wird das optische Bauelement entlang den Außenkanten von den weiteren Justiernasen 15 umfaßt, so daß die Fotodetektorzone 13 bzw. das optische Bauelement 2 in bezug auf das Wellenleiterabformelement 4 präzise justiert angeordnet ist. Das optische Bauelement 2 liegt nach dem Einlegen auf den Entlastungsstegen 6 auf.

Ein integriert optisches Bauelement, das mit Hilfe des in Figur 6 dargestellten Formwerkzeuges 1 und des in Figur 6 dargestellten optischen Bauelementes 2 hergestellt wurde, ist entsprechend dem in Figur 2 dargestellten und beschriebenen integrierten Bauelement aufgebaut, wobei das optische Bauelement 2 zusätzlich eine Justiernut 12 aufweist. Außerdem sind die von den weiteren Justiernasen 15 abgeformten Bereiche entlang den Außenkanten des optischen Bauelementes 2 angeordnet.

Durch die in Figur 4 und 5 dargestellten Wellenleiterabformelemente 4 wird ein Wellenleiter 8 erzeugt, der eine wellenlängenselektive Ankopplung ermöglicht. Sowohl eine kodirektionale Kopplung (Wechselwirkung zwischen zwei in gleicher Richtung laufenden Moden, Gitterperiode ungefähr 20 bis 100 ∗ 10⁻⁶ m) als auch eine kontradirektionale Kopplung (Wechselwirkung zwischen zwei Moden unterschiedlicher Ausbreitungsrichtung, Gitterperiode ungefähr 0,5 ∗ 10⁻⁶ m) sind möglich. Mit den in den Figuren 4 und 5 dargestellten Wellenleiterabformelementen 4 sind Modulationstiefen von mehreren 10⁻⁶ m erreichbar.

Eine weitere Möglichkeit der Strukturierung des Wellenleiters 8 besteht darin, die Höhe des Wellenleiters 8 zu variieren. Ist der Wellenleiter 8 mit dem optischen Bauelement 2 in der Substratplatte 11 wie in Figur 2 dargestellt eingebracht, so wird die Deckplatte 10 in dem Bereich, in dem die Deckplatte 10 auf dem Wellenleiter 8 aufliegt, periodisch strukturiert. Die Pufferschicht 7 behält dabei die glatte unstrukturierte Oberfläche. Die Bragg-Strukturierung der Deckplatte 10 erfolgt unabhängig von den Strukturierungsschritten der Substratplatte 11 in vorteilhafter Weise gleichzeitig mit dem Abformen der Faserführungsnuten. Liegt der Wellenleiter 8 in der Substratplatte 11, wie in Figur 3 dargestellt ist, so wird der Boden des Wellenleiters 8 entsprechend strukturiert. Dieser Strukturierungsschritt wird gleichzeitig mit dem Abformen des Wellenleiters 8 und der Faserführungsnuten vorgenommen.

Eine weitere wellenlängenselektive Ankopplung des optischen Bauelementes 2 an den Wellenleiter 8 wird erreicht, indem die Dicke der Pufferschicht 7 und/oder die Höhe des Wellenleiters 8 periodisch variiert werden. Besteht die Pufferschicht 7 aus Polymer, so kann das Gitter durch Prägen oder durch Ausbleichen mit UV-Licht, wenn das Polymer Zusätze enthält, die UV-Lichtempfindlich sind, hergestellt werden.

Eine Strukturierung der Oberfläche des optischen Bauelementes 2 ermöglicht ebenfalls eine wellenlängenselektive Ankopplung an den Wellenleiter 8. Dazu wird auf die Oberfläche des optischen Bauelementes 2 mit Hilfe von Fotolacktechnik, Fotolithographie mit Ätztechnik ein optisches Gitter aufgebracht.

Eine weitere Möglichkeit, eine wellenlängenselektive Ankopplung zu erhalten, besteht darin, die Elektroden 9, für eine große Gitterperiode, d.h. für eine kodirektionale Ankopplung periodisch zu formen. Dies wird erreicht, indem z.B. der Abstand zwischen den Elektroden variiert oder die Elektroden mäanderförmig angeordnet werden.

Das in den Figuren 2 und 3 dargestellte optisch integrierte Bauelement weist einen passiven Wellenleiter 8 und ein hybridintegriertes, evaneszent angekoppeltes optisches Bauelement 2, das als Fotodetektor ausgebildet ist, auf. Der Fotodetektor 2 und die Pufferschicht 7 erstrecken sich in Längsrichtung über einen Teil der gesamten Länge des optisch integrierten Bauelementes. Die in diesem Absorptionsbereich ausbreitungsfähigen Lichtverteilungen können sich je nach Auslegung der Pufferschicht 7 von der Lichtverteilung im passiven Wellenleiter 8 deutlich unterscheiden. Insbesondere kann die Zahl der ausbreitungsfähigen Moden höher sein. Die Leistung der ursprünglich im passiven Wellenleiter 8 angeregten Moden wird am Anfang der Absorptionszone auf die hier ausbreitungsfähigen Moden verteilt. Dabei wird diejenige Mode am stärksten angeregt, die in ihrer Lichtverteilung der Mode des passiven Wellenleiters 8 am ähnlichsten ist. Das im Wellenleiter 8 geführte Licht wird durch Absorption in axialer Richtung exponentiell gedämpft.

Ohne Hinzunahme einer periodischen Struktur kann durch unterschiedliche Auslegung der Pufferschicht 7 hinsichtlich der Schichtenfolge, der Schichtdicken und der Brechungsindizes das Absorptionsverhalten in weiten Grenzen verändert werden. So läßt sich erreichen, daß Licht unabhängig von seiner Polarisation gleich stark absorbiert wird, wobei der wirksame Absorptionskoeffizient etwa zwischen 50 und 300 dB/cm gewählt werden kann. Damit ist sowohl eine praktisch vollständige Absorption als auch ein Monitoring-Betrieb mit geringer Dämpfung des durchgehenden Lichtes möglich. Bei einer Wellenlänge von 1,3 ∗ 10⁻⁶ m und der oben beschriebenen Geometrie wird der Maximalwert von ca. 300 dB/cm beispielsweise bei einer 1,22 ∗ 10⁻⁶ m dicken Pufferschicht 7 mit einem Brechungsindex von 1,514 erreicht. Als abformbarer Werkstoff wurde ein Polymethylmethacrylat (PMMA) angenommen, wobei der Wellenleiter 8 einen Querschnitt von (6 x 6) ∗ 10⁻⁶ m² und einen gegenüber dem Substrat um 0,005 höheren Brechungsindex aufweist.

Weist die Pufferschicht 7 eine genügend große optische Dicke auf, so bildet sie zusammen mit dem Material des Fotodetektors einen zweiten, planaren Wellenleiter aus. Dieser verläuft parallel zum Wellenleiter 8 und bildet zusammen mit diesem einen stark asymmetrischen, vertikalen Richtkoppler. In diesem Richtkoppler sind im allgemeinen mehrere Moden ausbreitungsfähig. Es existieren solche Moden, deren Lichtverteilungen im wesentlichen im Wellenleiterkern konzentriert sind. Diese Lichtverteilungen dringen nur relativ wenig in das absorbierende optische Bauelement 2 ein und erfahren deshalb nur eine geringe Dämpfung. Ebenso existieren Moden, deren Intensitäten in der Pufferschicht 7 maximal werden und deshalb wesentlich stärker gedämpft werden. Es kann nun Lichtleistung aus Moden, die im Wellenleiter 8 konzentriert sind, in eine Mode übergekoppelt werden, die in der Pufferschicht 7 ihr Maximum annimmt, wenn eine periodische Störung der Richtkopplergeometrie mit der richtigen räumlichen Frequenz vorgesehen wird. Diese Frequenz ist im wesentlichen durch die Differenz der Phasenkonstanten der beteiligten optischen Moden gegeben.

## Patentansprüche

1. Verfahren zur Herstellung eines integrierten optischen Bauelementes, welches an einen Wellenleiter (8) gekoppelt ist, mit folgenden Schritten:
- ein optisches Bauelement (2) wird in Justiernasen (3) eines Formwerkzeuges (1) so eingelegt, daß seine optisch aktive Zone gegenüber einem Wellenleiter-Abformelement (4) zu liegen kommt,
- das optische Bauelement (2) wird mit einem abformbaren Werkszoff umformt bzw. mit einer aushärtbaren Flüssigkeit umgossen,
- nach dem Aushärten bzw. dem Abformen wird das Formwerkzeug (1) entfernt.

2. Verfahren nach Anspruch 1, dadurch gekennzeichnet, daß eine Justiernut (12) des optischen Bauelements (2) beim Einlegen des optischen Bauelementes (2) in das Formwerkzeug (1) auf eine erste Justiernase (16) aufgelegt wird, und daß das optische Bauelement (2) von weiteren Justiernasen (3), die entlang den Außenkanten des optischen Bauelementes (2) angeordnet sind, zusätzlich justiert wird.

3. Verfahren nach einem der Ansprüche 1 oder 2, dadurch gekennzeichnet, daß das Wellenleiterabformelement (4) zwischen Abformelementen (5) angeordnet ist.

4. Verfahren nach einem der Ansprüche 1 bis 3, dadurch gekennzeichnet, daß das optische Bauelement (2) beim Einlegen auf mindestens einen Entlastungssteg (6) aufgelegt wird.

5. Verfahren nach einem der vorgenannte Ansprüche, dadurch gekennzeichnet, daß das optische Bauelement (2) auf der Seite, die auf das Formwerkzeug (1) gelegt wird, mit einer Pufferschicht (7) zur besseren Ankopplung des optischen Bauelementes (2) an den Wellenleiter (8) versehen wird.

6. Verfahren nach einem der Ansprüche 1 bis 5, dadurch gekennzeichnet, daß auf der Pufferschicht (7) und/oder auf der Seite des optischen Bauelementes (2), die dem Wellenleiterabformelement (4) zugewandt ist, abgeformte Entlastungsstege (14) angeordnet werden.

7. Verfahren nach einem der Ansprüche 1 bis 6, dadurch gekennzeichnet, daß die Pufferschicht (7) aus Schichten mit unterschiedlichen Dicken und/oder unterschiedlichen Brechungsindizes hergestellt wird.

8. Verfahren nach einem der Ansprüche 1 bis 7, dadurch gekennzeichnet, daß das optische Bauelement (2), gegebenenfalls die Pufferschicht (7), und der nach der Abformung entstehende Wellenleiter (8) in eine Substratplatte (11) eingebracht werden, die durch das Aushärten der Flüssigkeit bzw. durch das Abformen gebildet wird.

9. Verfahren nach einem der Ansprüche 1 bis 7, dadurch gekennzeichnet, daß das optische Bauelement (2) und gegebenenfalls die Pufferschicht (7) in einer Deckplatte (10) untergebracht werden.

10. Verfahren nach einem der Ansprüche 1 bis 9, dadurch gekennzeichnet, daß für die Pufferschicht (7) ein optischer Brechungsindex gewählt wird, der sich von dem Brechungsindex der aktiven Zone (13) und dem Brechungsindex des Wellenleiters (6) unterscheidet.

11. Verfahren nach einem der Ansprüche 5 bis 10, dadurch gekennzeichnet, daß die Pufferschicht (7) zur Einstellung des Brechungsindexes mit Heizelementen versehen wird.

12. Verfahren nach einem der Ansprüche 5 bis 11, dadurch gekennzeichnet, daß die Pufferschicht (7) als weiterer Wellenleiter ausgebildet wird.

13. Verfahren nach einem der Ansprüche 5 bis 11, dadurch gekennzeichnet, daß die Pufferschicht (7) mit in der Höhe periodischen Änderungen versehen wird.

14. Verfahren nach einem der Ansprüche 1 bis 13, dadurch gekennzeichnet, daß das Wellenleiter-Abform element (4) in seiner Form periodisch so strukturiert wird, daß eine wellenlängenselektive Ankopplung des optischen Bauelementes (2) an den Wellenleiter (8) erfolgen kann.

15. Verfahren nach einem der Ansprüche 1 bis 14, dadurch gekennzeichnet, daß die Breite des Wellenleiter-Abform elements periodisch variiert wird.

16. Verfahren nach Anspruch 15, dadurch gekennzeichnet, daß das Wellenleiter-Abform element (4) mit einer konstanten Breite ausgebildet wird und periodisch strukturiert wird.

17. Verfahren nach Anspruch 14, dadurch gekennzeichnet, daß die Höhe des Wellenleiter-Abform elements mit periodischen Änderungen versehen wird.

18. Verfahren nach einem der Ansprüche 1 bis 17, dadurch gekennzeichnet, daß die Oberfläche des optischen Bauelementes (2) als optisches Gitter strukturiert wird.

19. Verfahren nach einem der Ansprüche 1 bis 17, dadurch gekennzeichnet, daß das optische Bauelement (2) mit Elektroden (9) versehen wird und daß die Elektroden (9) durch ihre Anordnung bzw. Ausführung ein optisches Gitter bilden.

## Claims

1. Method for producing an integrated optical component which is coupled to a waveguide (8), having the following steps:
- an optical component (2) is inserted into adjusting noses (3) of a mould (1) so that its optically active zone comes to be situated opposite a waveguide moulding element (4) ,
- a mouldable material is moulded around the optical component (2), or potted by means of a curable liquid is,
- the mould (1) is removed after the curing or moulding.

2. Method according to Claim 1, characterized in that an adjusting groove (12) of the optical component (2) is laid upon a first adjusting nose (16) when the optical component (2) is inserted in the mould (1), and in that the optical component (2) is additionally adjusted by further adjusting noses (3) which are arranged along the outside edges of the optical component (2).

3. Method according to one of Claims 1 or 2, characterized in that the waveguide moulding element (4) is arranged between moulding elements (5).

4. Method according to one of Claims 1 to 3, characterized in that upon being inserted the optical component (2) is laid upon at least one relieving web.

5. Method according to one of the preceding claims, characterized in that, on the side which is laid upon the mould (1), the optical component (2) is provided with a buffer layer (7) for the purpose of coupling the optical component (2) more effectively to the waveguide (8).

6. Method according to one of Claims 1 to 5, characterized in that moulded relieving webs (14) are arranged on the buffer layer (7) and/or on the side of the optical component (2) which faces the waveguide moulding element (4).

7. Method according to one of Claims 1 to 6, characterized in that the buffer layer (7) is produced from layers having different thicknesses and/or different refractive indices.

8. Method according to one of Claims 1 to 7, characterized in that the optical component (2), if appropriate the buffer layer (7), and the waveguide (8) produced after moulding are inserted into a substrate plate (11) which is formed by the curing of the liquid or by the moulding.

9. Method according to one of Claims 1 to 7, characterized in that the optical component (2) and, if appropriate, the buffer layer (7) are accommodated in a top plate (10).

10. Method according to one of Claims 1 to 9, characterized in that an optical refractive index is selected for the buffer layer (7) which differs from the refractive index of the active zone (13) and from the refractive index of the waveguide (8).

11. Method according to one of Claims 5 to 10, characterized in that the buffer layer (7) is provided with heating elements for setting the refractive index.

12. Method according to one of Claims 5 to 11, characterized in that the buffer layer (7) is constructed as a further waveguide.

13. Method according to one of Claims 5 to 11, characterized in that the buffer layer (7) is provided with periodic variations in height.

14. Method according to one of Claims 1 to 13, characterized in that the shape of the waveguide moulding element (4) is structured such that the optical component (2) can be coupled to the waveguide (8) in a wavelength-selective fashion.

15. Method according to one of Claims 1 to 14, characterized in that the width of the waveguide moulding element is varied periodically.

16. Method according to Claim 15, characterized in that the waveguide moulding element (4) is constructed with a constant width and structured periodically.

17. Method according to Claim 14, characterized in that the waveguide moulding element is provided with periodic variations in height.

18. Method according to one of Claims 1 to 17, characterized in that the surface of the optical component (2) is structured as an optical grating.

19. Method according to one of Claims 1 to 17, characterized in that the optical component (2) is provided with electrodes (9), and in that the electrodes (9) form an optical grating by means of their arrangement or design.

## Revendications

1. Procédé de fabrication d'un composant optique intégré couplé sur un guide d'ondes (8), comprenant les étapes suivantes :
- on place un composant optique (2) dans des becs d'ajustage (3) d'un outil de moulage (1) pour que sa zone optiquement active arrive en appui contre une empreinte de guide d'ondes (4),
- on moule le composant optique (2) avec une matière moulable ou un liquide susceptible de durcir,
- après prise ou durcissement, on enlève de nouveau l'outil de moulage (1).

2. Procédé selon la revendication 1,
caractérisé en ce qu'
- on positionne une rainure d'ajustage (12) du composant optique (2) sur un premier bec d'ajustage (16) lorsqu'on place le composant optique (2) dans l'outil de moulage (1), et
- on ajuste en outre le composant optique (2) avec d'autres becs d'ajustage (3) prévus le long des arêtes extérieures du composant optique (2).

3. Procédé selon l'une des revendications 1 ou 2,
caractérisé en ce que
l'empreinte de guide d'ondes (4) se trouve entre les empreintes (5).

4. Procédé selon l'une des revendications 1 à 3,
caractérisé en ce que
le composant optique (2) est placé sur au moins une nervure de décharge (6) lors de sa mise en place.

5. Procédé selon l'une quelconque des revendications précédentes,
caractérisé en ce que
le composant optique (2) comporte, sur le côté par lequel on le place sur l'outil de moulage (1), une couche tampon (7) pour améliorer le couplage du composant optique (2) avec le guide d'ondes (8).

6. Procédé selon l'une quelconque des revendications 1 à 5,
caractérisé en ce que
des nervures de décharge (14) sont moulées sur la couche tampon (7) et/ou sur le côté du composant optique (12) tourné vers l'empreinte de guide d'ondes (4).

7. Procédé selon l'une quelconque des revendications 1 à 6,
caractérisé en ce que
la couche tampon (7) est formée de couches d'épaisseurs différentes et/ou d'indices de réfraction différents.

8. Procédé selon l'une quelconque des revendications 1 à 7,
caractérisé en ce que
le composant optique (2), le cas échéant la couche tampon (7) et le guide d'ondes (8) obtenu par moulage, sont placés dans une plaque de substrat (11) formée par durcissement du liquide ou par moulage.

9. Procédé selon l'une quelconque des revendications 1 à 7,
caractérisé en ce que
le composant optique (2) et le cas échéant la couche tampon (7) sont logés dans une plaque de couverture (10).

10. Procédé selon l'une quelconque des revendications 1 à 9,
caractérisé en ce qu'
on choisit pour la couche tampon (7), un indice de réfraction qui diffère de l'indice de réfraction de la zone active (13) et de celui du guide d'ondes (8).

11. Procédé selon l'une des revendications 5 à 10,
caractérisé en ce que
la couche tampon (7) est munie d'éléments chauffants pour régler son indice de réfraction.

12. Procédé selon l'une des revendications 5 à 11,
caractérisé en ce que
la couche tampon (7) est formée par un autre guide d'ondes.

13. Procédé selon l'une des revendications 5 à 11,
caractérisé en ce que
la couche tampon (7) est munie de modifications périodiques de hauteur.

14. Procédé selon l'une des revendications 1 à 13,
caractérisé en ce que
l'empreinte de guide d'ondes (4) a une forme à structure périodique permettant un couplage sélectif en longueur d'onde du composant optique (2) sur le guide d'ondes (8).

15. Procédé selon l'une des revendications 1 à 14,
caractérisé en ce que
la largeur de l'empreinte de guide d'onde varie périodiquement.

16. Procédé selon la revendication 15,
caractérisé en ce que
l'empreinte de guide d'ondes (4) a une largeur constante et une structure périodique.

17. Procédé selon la revendication 14,
caractérisé en ce que
la hauteur de l'empreinte de guide d'ondes présente des variations périodiques.

18. Procédé selon l'une des revendications 1 à 17,
caractérisé en ce que
la surface du composant optique (2) est en structure de réseau optique.

19. Procédé selon l'une des revendications 1 à 17,
caractérisé en ce que
le composant optique (2) est muni d'électrodes (9) et ces électrodes (9) forment un réseau optique par leur disposition et leur réalisation.
